# EUROPEAN PATENT APPLICATION

(11) **EP 4 324 688 A1**
(43) Date of publication of application: **21.02.2024**
(21) Application number: 23191393.0
(22) Date of filing: 14.08.2023
(51) Int. Cl.: B60L 53/30, B60L 53/31

(54) **ELECTRIC VEHICLE CHARGING SYSTEM WITH CEILING MOUNTED ELECTRICAL POWER DISTRIBUTION**

(30) Priority: 18.08.2022 US 202263398895 P
(71) Applicant: Eaton Intelligent Power Limited, Dublin 4, D04 Y0C2 (IE)
(72) Inventor: REESE, Robert J., Edwardsville, 62025 (US)
(74) Representative: Schwan Schorer & Partner mbB

(57) **Abstract**

Embodiments of an electric vehicle (EV) charging system for implementation in structures that house electric vehicles, such as warehouses or parking structures, are disclosed. The EV charging system can be overhead mounted from a building's ceiling, using cable tray for electrical power distribution and an integrated EV charger mounting system, thus eliminating the risk of EV cables and charging handles being dropped on floor areas. The disclosed ceiling mountable system is especially advantageous for electric vehicle fleet charging applications and multi-level parking lot applications, as the disclosed system enables simplification and lowest-total-installed-cost in comparison to traditional ground-mounted EV charging systems and related electrical infrastructure. Another advantage is the use of open cable tray for electrical power cable routing and support, which is easily expandable to accommodate additional EV chargers by adding modular cable tray or cable runs to load center/drop-out sections for EV chargers and cable management.

## Description

### CROSS REFERENCE TO RELATED APPLICATIONS:

This application claims priority to U.S. Patent Application Serial No. 63/398,895, filed August 18, 2022, entitled "Electric Vehicle Charging System With Ceiling Mounted Electrical Power Distribution Using Cable Tray And Structural Attachments".

### FIELD OF THE INVENTION:

The disclosed concept pertains generally to charging systems and, more particularly, to charging systems for electric vehicles.

### BACKGROUND OF THE INVENTION:

Traditional electric vehicle (EV) charging systems for applications involving public, private, and fleet vehicle charging of electric vehicles typically utilize underground, ground-mounted, or wall-mounted electrical power distribution. These traditional charging systems can lead to EV cables and charging handles being placed or dropped on floor areas, causing damage to these items and posing trip hazards. The potential for the occurrence of such damage or trip hazards increases in a larger facility such as a warehouse or parking structure having a large number of charging handles and cables. In addition, the ground-level or underground trenching required for implementing floor-installed electrical utilities with bollards and/or pedestals can incur significant costs.

There is thus room for improvement in EV charging systems implemented in structures that house vehicles.

### SUMMARY OF THE INVENTION:

These needs, and others, are met by an improved electric vehicle (EV) charging system for implementation in structures, such as warehouses or parking structures, that house electric vehicles. The disclosed EV charging system can be overhead-mounted from a building's ceiling, using cable tray for electrical power distribution and an integrated EV charger mounting system, thus eliminating the risk of EV cables and charging handles being dropped on floor areas. The use of open cable tray for electrical power feeder cable routing and support renders the EV charging system easily expandable to accommodate additional EV chargers by adding modular cable tray or cable runs to load center/drop-out sections for EV chargers and cable management. The disclosed ceiling mountable system is especially advantageous for electric vehicle fleet charging applications and multi-level parking lot applications.

In accordance with one aspect of the disclosed concept, an electric vehicle (EV) charging system comprises: a number of cable trays comprising EV charger mounting, a number of feeder cables electrically connected to a load center and supported by the number of cable trays, and a number of EV charging stations connected to the number of power feeder line cables and mounted to the EV charger mounting. Each EV charging station includes: a console, an EV charging cable connected to the console, and an EV charging handle electrically connected to the EV charging cable, the EV charging handle being structured to electrically connect to an electric vehicle. The number of cable trays are structured to be overhead-mounted to the ceiling of a building.

### BRIEF DESCRIPTION OF THE DRAWINGS:

A full understanding of the invention can be gained from the following description of the preferred embodiments when read in conjunction with the accompanying drawings in which:
FIG. 1 is a partially schematic depiction of an electric vehicle (EV) charging system that can be mounted to the ceiling of a building housing multiple vehicles, in accordance with an example embodiment of the disclosed concept;
FIG. 2A shows an arrangement for coupling a mesh-style cable tray of the EV charging system to a building ceiling, in accordance with an example embodiment of the disclosed concept;
FIG. 2B shows an arrangement for coupling a ladder-style cable tray of the EV charging system to a building ceiling, in accordance with an example embodiment of the disclosed concept;
FIG. 3A shows a perspective view of a strut shown in FIGS. 2A-2B;
FIG. 3B shows a perspective view of a strut and attachment hardware that can be used to couple the cable trays shown in FIGS. 2A-2B to the struts shown in FIGS. 2A, in accordance with an example embodiment of the disclosed concept; and
FIG. 4 shows an example cable tray layout for the EV charging system, where drop-out sections of the cable tray have integrated mounting plates for the EV charging consoles, in accordance with an example embodiment of the disclosed concept.

### DETAILED DESCRIPTION OF THE INVENTION:

Directional phrases used herein, such as, for example, left, right, front, back, top, bottom and derivatives thereof, relate to the orientation of the elements shown in the drawings and are not limiting upon the claims unless expressly recited therein.

As used herein, the singular form of "a", "an", and "the" include plural references unless the context clearly dictates otherwise.

As employed herein, the statement that two or more parts are "coupled" together shall mean that the parts are joined together either directly or joined through one or more intermediate parts or components, so long as a link occurs.

As employed herein, when ordinal terms such as "first" and "second" are used to modify a noun, such use is simply intended to distinguish one item from another, and is not intended to require a sequential order unless specifically stated.

As employed herein, the term "number" shall mean one or an integer greater than one *(i.e.,* a plurality).

Described herein are embodiments of an EV charging system 100 suitable for installation in structures that house electric vehicles, including large-scale structures such as warehouses or multi-level parking structures, for example and without limitation. The disclosed EV charging system is structured to be overhead mounted from a building ceiling, using cable tray for electrical power distribution and an integrated EV charger mounting system, thus avoiding the problems found in traditional charging systems iterated above.

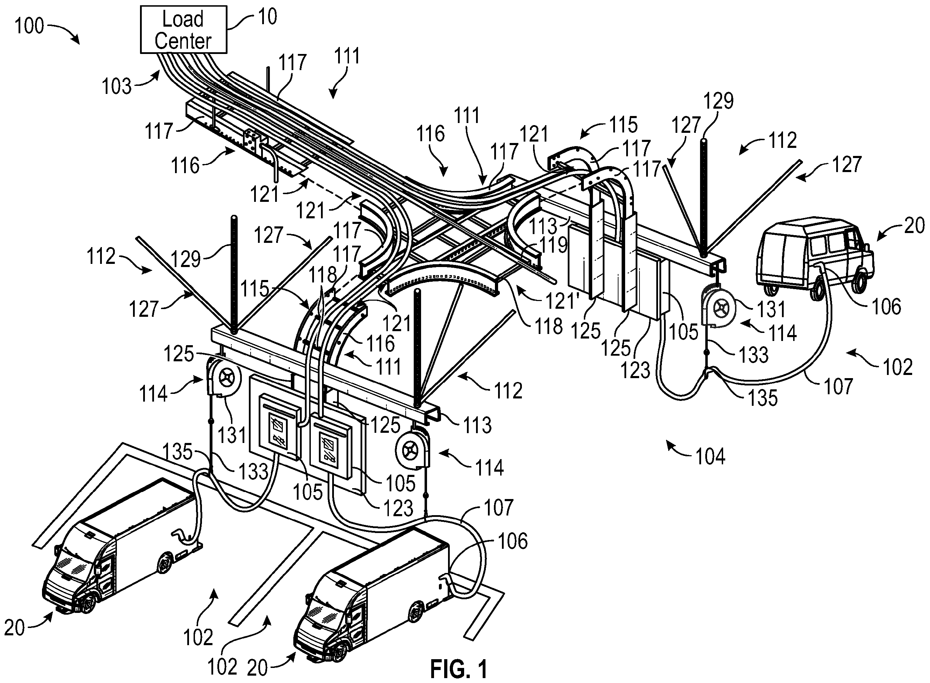

Reference is now made to FIG. 1, which shows a partially schematic depiction and perspective view of an electric vehicle (EV) charging system 100, in accordance with an example embodiment of the disclosed concept. The EV charging system 100 is structured to connect to the existing load center 10 of any facility structured to house a plurality of electric vehicles 20. It should be understood that the load center 10 provides a connection point to utility/mains electrical power. Although no building ceiling is shown in FIG. 1 in order to more clearly show the components of the EV charging system 100, it should be understood that the components of the EV charging system 100 are all depicted as being suspended above the floor, while the electric vehicles 20 are depicted as resting on the floor. It should also be understood that the size of the EV charging station 100 and number of components of the EV charging station 100 shown in FIG. 1 are provided only as an illustrative example and are not intended to be limiting on the specific number or type of each component that can be used to install the EV charging system 100, as will become apparent from the detailed description provided hereinafter.

Prior to describing the features of the EV charging system 100 in detail, it is noted that various components of the EV charging system 100 are described herein as being "coupled" to one another, and it should be understood that the components described herein are designed to be coupled to one another using various styles of bolts, nuts, and other known types of attachment hardware. In addition, it is noted that several of the objects depicted in FIG. 1 are not drawn to scale, in order to make certain features of the EV charging system 100 easier to discern. For example, in FIG. 1, some components of the charging system 100 are depicted as being larger than they actually are relative to the size of the electric vehicles 20.

The EV charging system 100 comprises a number of charging stations 102, a number of power distribution feeder cables 103, and a ceiling mountable support system 104. Each charging station 102 includes a console 105, a charging handle 106, and a charging cable 107 that electrically connects the console 105 and the charging handle 106. Each of the feeder cables 103 is electrically connected between the load center 10 and the console 105 of one of the charging stations 102. In one example embodiment, the specifications of the feeder cables 103 are 208-240 V, 1 Ph, 60 Hz, 100A, and the charging handles 106 are 80A output each (19.2kW at 240 V).

Each console 105 can comprise a user interface that informs a user of preprogrammed charging settings, enables a user to select charging settings, informs the user of charging status, etc. In addition, each console 105 can be structured to cradle its corresponding charging handle 106 when the charging handle is not being used to charge a vehicle 20. Each charging handle 106 is structured to interface with an electric vehicle 20 in order to charge the battery of the electric vehicle 20 using the electric power provided by the load center 10.

The ceiling mountable support system 104 (referred to hereinafter as the "support system 104" for brevity) comprises a plurality of cable trays 111, a plurality of suspension components 112, a plurality of struts 113, and a plurality of cable balancers 114. It is noted that the setup of the cable trays 111 is portrayed in exploded view in FIG. 1 in order to make certain features of the support system 104 more apparent, but it should be understood that the cable trays 111 are coupled to one another (as denoted by the dashed connection lines in FIG. 1) when the support system 104 is actually installed in a building. The struts 113 shown and described herein can be either metallic or non-metallic. As detailed further later herein, the suspension components 112 are structured to couple to a building ceiling certain other components such as the struts 113 and the cable trays 111 in order to enable these components to be mounted overhead. The struts 113 and cable weight-balancers 114 provide additional support for the weight of the charging stations 102 when the charging stations 102 are mounted to the cable trays 111.

The cable trays 111 support the feeder cables 103 and route the feeder cables 103 from the load center 10 to a number of locations positioned at heights accessible by a user, with said locations being designated as drop-out sections 115 (there are two drop-out sections 115 shown and numbered in FIG. 1). It is noted that the drop-out sections 115 are simply specific sections of the support system 104 where there is a cable tray 111 positioned sufficiently far below the ceiling to be at a height accessible by a user, while still being positioned sufficiently high off of the ground to avoid posing a tripping hazard or other nuisance. More specifically, each drop-out section 115 is structured to have a console 105 coupled to it at a height accessible by a user. Any section of cable tray 111 that is not a drop-out section 115 can be referred to as a feeder routing tray 116 (there are two feeder routing trays 116 shown and numbered in FIG. 1).

Each cable tray 111 can be single-sided or multi-sided and comprises a plurality of siderails 117. It will be appreciated that several different types of cable trays are widely available, and it is noted that many types of cable tray are suitable for use as the cable trays 111 included in the EV charging system 100. For example and without limitation, the cable trays 111 shown in the figures include ladder-type cable trays and mesh-type cable trays. As numbered in FIG. 1, both ladder-type cable trays 111 and mesh-type cable trays 111 are formed with a plurality of crossbars 118. Each siderail 117 of a given cable tray 111 is disposed a distance apart from every other siderail 117 of the given cable tray 111, and each of the crossbars 118 is coupled to and extends between two siderails 117. Mesh-style cable trays 111 additionally comprise a number of support bars 119 that are coupled to and extend between two crossbars 118 (only one support bar 119 is numbered in FIG. 1, the support bar 119 being included in one of the feeder routing trays 116). The crossbars 118 and support bars 119 (where applicable) support the feeder cables 103 that are routed through the cable trays 111. It will be appreciated that additional styles of cable trays other than the ladder-style and mesh-style cable trays 111 shown in FIG. 1 can be used in the EV charging system 100 without departing from the scope of the disclosed concept.

Each cable tray 111 has at least two entry/exit points 121 positioned between the siderails 117, with each entry/exit point 121 being a space between two siderails 117 that enables a feeder cable 103 to enter into or exit the given cable tray 111. It is noted that, in one example embodiment of the support system 104 and as shown in FIG. 1, the cable trays 111 that form the drop-out sections 115 are curved so that when the support system 104 is mounted to a building ceiling, one entry/exit point 121 of each drop-out section 115 is positioned closer to the ceiling and another entry/exit point 121 of each drop-out section 115 is positioned closer to the floor.

In FIG. 1, one entry/exit point 121 of one of the feeder routing trays 116 is numbered as 121', in order to denote that there is no other section of cable tray 111 connected/coupled to that feeder routing tray 116 adjacent to that entry/exit point 121'. An entry/exit point 121' such as this can be referred to as "unconnected", in order to denote that this particular entry/exit point 121' is not connected to another section of cable tray 111. The unconnected entry/exit point 121' in FIG. 1 highlights the modular and highly adaptable nature of the disclosed EV charging system 100. Specifically, the unconnected entry/exit point 121' demonstrates how, if additional charging stations 102 are needed for a building after the initial installation of the EV charging system 100, the use of cable trays 111 for routing and management of the feeder cables 103 makes it relatively easy to add additional drop-out sections 115 and/or feeder routing trays 116 for additional charging stations 102. In a first non-limiting example, if only one or two additional charging stations 102 are needed after the EV charging system 100 is installed in a building as shown in FIG. 1, then a drop-out section 115 can be connected to the unconnected entry/exit point 121'. In a second non-limiting example, if more than two additional charging stations 102 are needed after initial installation of the EV charging system 100, then another feeder routing tray 116 with more than two entry/exit points 121 can be connected to the unconnected entry/exit point 121', so that more than one drop-out section 115 can be coupled to the newly added feeder routing tray 116.

In FIG. 1, each charging console 105 is mounted to a mounting plate 123, with each mounting plate 123 being mounted to a drop-out section 115. In order to mount a mounting plate 123 to each drop-out section 115, in one example embodiment, an extension rail 125 can be coupled to each siderail 117 at the end of the sidewall 117 closest to the floor, such that each extension rail 125 extends from the corresponding siderail 117 toward the floor. The mounting plate 123 can then be coupled to the extension rails 125, as shown in FIG. 1. In another example embodiment, the extension rails 125 can be omitted and the mounting plate 123 can be mounted directly to the drop-out section 115. Each mounting plate 123 is structured to mount a number of consoles 105. In one example embodiment of the disclosed concept, each mounting plate 123 is structured to mount a maximum of two consoles 105. The consoles 105 can be mounted on the mounting plates 123 in any suitable manner, such as with bolts and nuts, for example and without limitation.

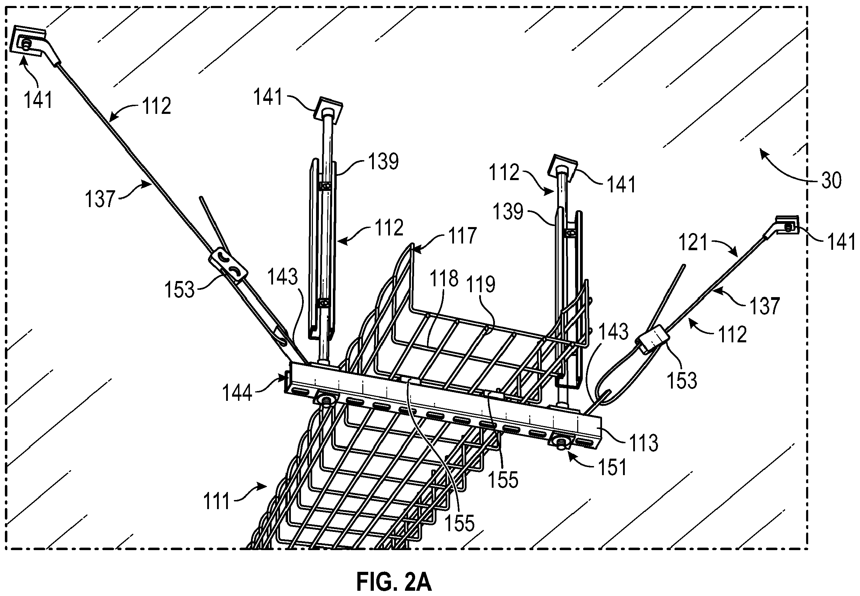

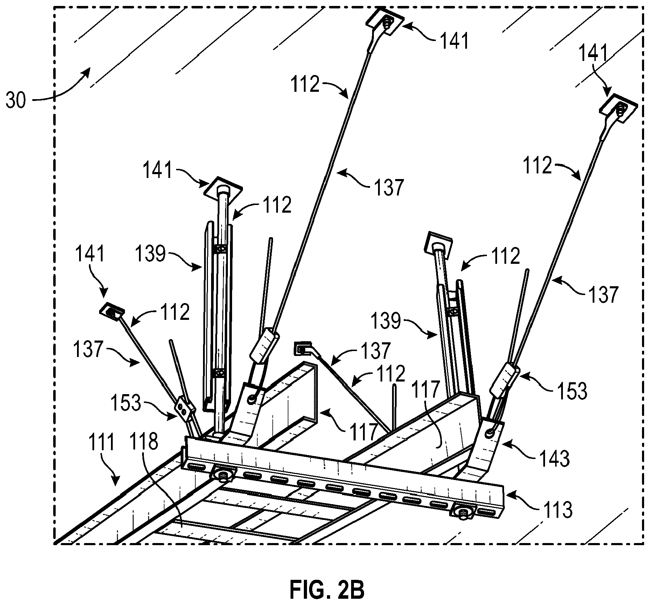

For each drop-out section 115 and the attached mounting plate 123, a strut 113 can be coupled to the extension rails 125 of the drop-out section 115 (or directly to the drop-out section 115, when the extension rails 125 are omitted) in order to provide more support for the weight of the components of the charging stations 102. It will be appreciated that more than one strut 113 can be coupled to the drop-out section 115 without departing from the scope of the disclosed concept. In addition, each strut 113 is coupled to a number of suspension components 112. The suspension components 112 can include, for example and without limitation, a number of suspension cables 127 and a number of suspension springs 129, with each of the suspension cables 127 and suspension springs 129 being structured to be coupled to the building ceiling. It will be appreciated that suspending the struts 113 with the suspension cables 127 and suspension springs 129 reduces the strain put on the extension rails 125 and/or drop-out sections 115 by the weight of the components of each charging station 102. As shown and detailed further in conjunction with FIGS. 2A and 2B, the struts 113 and suspension components 112 can also be used to couple the cable trays 111 that are not drop-out sections 115 to a ceiling as well.

Furthermore, each charging station 102 can include a designated cable weight-balancer 114 that is coupled to the ceiling, for example and without limitation via a strut 113, and is configured to keep the charging handle 106 and charging cable 107 suspended off of the floor. In an example embodiment, the charging cables 107 are 18-foot to 25-foot lengths of heavy gage electrical cable, so the cable weight-balancers 114 eliminate the need for a user to exert significant force in order to support the weight of a charging cable 107 while connecting the charging handle 106 to an electric vehicle 20 or removing the cable charging handle 106 from the electric vehicle 20. The cable weight-balancers 114 can comprise, for example and without limitation, a spring balancer. It is noted that the cable weight-balancers 114 shown in FIG. 1 are spring balancers comprising a reel 131 and a balancer cable 133 extending from the reel 131. In FIG. 1, the reel 131 is coupled to the strut 113 and the balancer cable 133 includes a cable attachment support means 135 structured to couple the charging cable 107 to the cable weight-balancer 114. For example and without limitation, the cable attachment support means 135 can comprise a carabiner such that the charging cable 107 can be inserted through the loop of the carabiner.

Each charging cable 107 is coupled to its corresponding cable-weight balancer 114 using the cable attachment support means 135, and the cable weight-balancer 114 is positioned at a height to ensure that the tension on the balancer cable 133 keeps the charging handle 106 and charging cable 106 suspended off of the building floor when no external force is exerted against the charging handle 106 and charging cable 107. As previously noted, each console 105 can be structured to cradle the charging handle 106 when the charging handle 106 is not being used. The cable weight-balancer 114 ensures that the charging handle 106 and charging cable 107 do not drop to the ground, for example and without limitation, in the event that a user does not properly re-cradle a charging handle 106 after charging a vehicle 20 or in the event that a user inadvertently drops the charging handle 106.

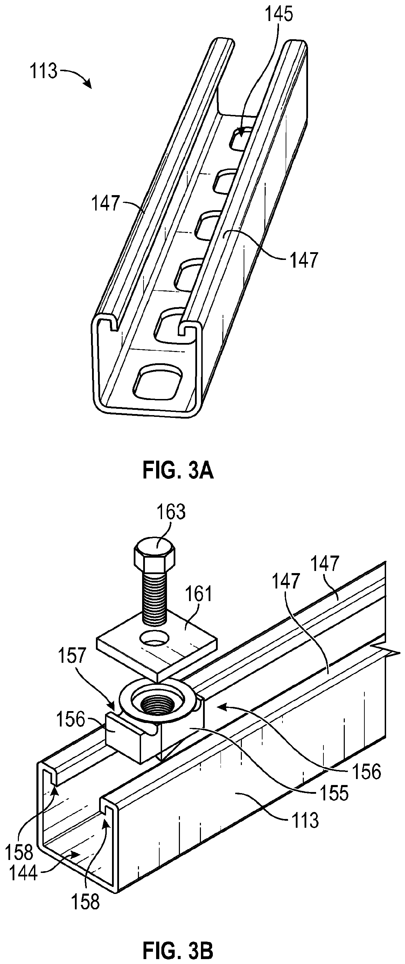

Referring now to FIGS. 2A-2B and 3A-3B, some of the hardware that can be used to couple various components of the EV charging system 100 to one another and to the ceiling of a building are shown and explained in more detail. In addition, examples of seismic bracing components are shown, which may be necessitated by certain local building codes and/or environmental factors. It is noted that the attachment hardware and coupling methods described in conjunction with FIGS. 2A-2B and 3A-3B are illustrative in nature, and it should be understood that the attachment hardware described hereinafter, such as anchors and angled brackets, can be used to couple together components of the EV charging system 100 other than those shown in FIGS. 2A-2B without departing from the scope of the disclosed concept.

Referring first to FIG. 2A, an illustrative example of an arrangement for coupling a mesh-style cable tray 111 to a building ceiling 30 is shown. The cable tray 111 is coupled to a strut 113, while the strut 113 is coupled to and supported by several suspension components 112 that are coupled to the ceiling 30. The suspension components 112 shown in FIG. 2A include two seismic bracing cables 137 and two seismic bracing rods 139. The suspension components 112 are all coupled to the ceiling 30 with anchors 141 and other fasteners (not numbered).

Referring to FIG. 3A in conjunction with FIG. 2A, it can be seen in FIG. 3A that the strut 113 shown in FIG. 2A is a punched channel type strut such that a channel 144 of the strut 113 is formed with a plurality of channel openings 145. Angled brackets 143 are used to secure the suspension components 112 to the strut 113. In order to couple the seismic bracing rods 139 to the strut 113, each angled bracket 143 is positioned on the curved edges 147 of the strut 113 such that one opening formed in the angled bracket 143 aligns with a channel opening 145. The end of each seismic bracing rod 139 not anchored to the ceiling 30 is inserted through the opening in the angled bracket 143 and through the aligning channel opening 145, and then secured with a washer (not numbered) and a nut 151. Afterward, for each seismic bracing cable 137, the end of the seismic bracing cable 137 not anchored to the ceiling 30 can be inserted through a second opening of the corresponding angled bracket 143 and secured with a clamp 153.

Referring now to FIG. 3B in conjunction with FIG. 2A, FIG. 3B shows an example of a self-locking nut 155 that can be used to couple the cable tray 111 to the strut 113 as shown in FIG. 2A. The self-locking nut 155 has a plurality of protrusions 156, each of which is formed with a groove 157, and each curved edge 147 of the strut 113 curves into the channel 144 to form a lip 158. Thus, when the self-locking nut 155 is inserted into the channel 144 of the strut 113 in the orientation shown in FIG. 3B and then rotated, each groove 157 of the self-locking nut 155 aligns with and can engage one of the lips 158 of the strut 113. When the self-locking nut 155 is so oriented, i.e. such that the grooves 157 are aligned with and/or engaged with the lips 158 of the strut 113, the self-locking nut 155 is considered to be in a locked position, as the lips 158 of the strut 113 obstruct upward movement of the protrusions 156 and thus prevent the self-locking nut 155 from being lifted up out of the channel 144 ("up" and "upward" being relative to the view shown in FIG. 3B). Thus, if the self-locking nut 155 is first placed into the channel 144 and subsequently rotated into the locked position, and the strut 113 is placed underneath one of the openings in the mesh of the cable tray 111 as shown in FIG. 2A, a washer 161 can be placed on top of the cable tray 111 such that the central opening of the washer 161 aligns with the center of the self-locking nut 155, and a bolt 163 can be inserted into the central opening of the washer 161 and into the self-locking nut 155 and tightened in order to secure the cable tray 111 to the strut 113.

In FIG. 2B, an illustrative example of an arrangement for coupling a ladder-style cable tray 111 to a building ceiling 30 is shown. Several of the same components used to couple the mesh-style cable tray 111 in FIG. 2A to the ceiling 30 are also used to couple the ladder-style cable tray 111 to the building ceiling 30 in FIG. 2B, and in the same manner described with respect to FIG. 2A. FIG. 2B shows that additional seismic bracing cables 137 can be used and that the suspension components 112 can be attached to the struts 113 in varying orientations, without departing from the scope of the disclosed concept. In addition, it is noted that the cable tray 111 shown in FIG. 2B is coupled by its siderails 117 to the strut 113.

In the arrangement shown in FIG. 2B, the siderails 117 can be formed with apertures structured to receive bolts. Thus, in order to couple a given siderail 117 to the strut 113, the self-locking nut 155 can be placed in the channel 144 of the strut 113 and rotated in order to prevent the self-locking nut 155 from being lifted up out of the channel 144 as previously described in conjunction with FIG. 3B, then the siderail 117 can be placed on top of the self-locking nut 155 such that an aperture in the siderail 117 is positioned over the self-locking nut 155, then a washer 161 can be placed on top of the aperture in the siderail 117 such that the central opening of the washer 161 aligns with the aperture in the siderail 117, and a bolt 163 can be inserted into the central opening of the washer 161 and through the aperture in the siderail 117 into the self-locking nut 155 and tightened in order to secure the cable tray 111 to the strut 113.

The descriptions of FIGS. 1, 2A-2B, and 3A-3B provided herein are intended to convey the modular nature of the disclosed EV charging system 100 and the ease with which the EV charging system 100 can be installed in different buildings and adapted for use in a wide variety of settings, such as special geographic regions that require seismic bracing for code compliance. In addition, it should be noted that features of the EV charging system 100 shown in one figure can be combined with features shown in other figures. For example and without limitation, for the sake of clarity of illustration, the feeder routing trays 116 in FIG. 1 are not depicted as being coupled to a building ceiling by struts 113 and suspension components 112 as the cable trays 111 in FIGS. 2A-2B are, but it should be understood that the feeder routing trays 116 shown in FIG. 1 can be coupled to a building ceiling by struts 113 and suspension components 112 without departing from the scope of the disclosed concept. In addition, the same methods used to couple the struts 113 to the cable trays 111 as described in conjunction with FIGS. 2A and 2B can be used to couple the struts 113 to the extension rails 125 as shown in FIG. 1 (or can be used to couple the struts 113 to the drop-out sections 115, if extension rails 125 are omitted).

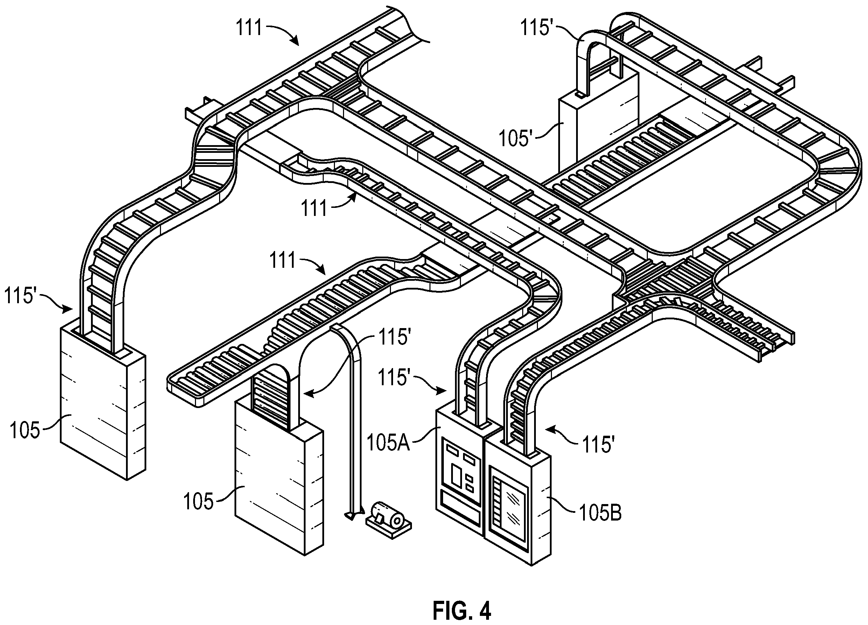

FIG. 4 provides another example of the adaptability of the EV charging system 100 by showing another non-limiting example layout of the cable trays 111 and a different embodiment of the charger mounting that can be used instead of the discrete component mounting plates 123 shown in FIG. 1. In the cable tray layout shown in FIG. 4, some of cable trays 111 have slight bends that allow some rows of cable trays 111 to be routed underneath other rows, and drop-out sections 115' are used instead of the drop-out sections 115 shown in FIG. 1. The drop-out sections 115' shown in FIG. 4 are formed with integrated mounting structures to which the charging consoles 105 can be mounted, rather than requiring that a discrete component mounting plate 123 be coupled to a drop-out section 115 as shown in FIG. 1. Although not shown in FIG. 4, it will be appreciated that a number of struts 113 and accompanying suspension components 112 can be used to couple each of the drop-out sections 115' (as well as the other sections of cable tray 111) to a building ceiling in order to provide further support to each of the drop-out sections 115' (and the rest of the cable tray sections 111), in manners similar to those previously described in conjunction with FIGS. 1, 2A-2B, and 3A-3B. It will be further appreciated that any dropout sections 115' positioned in sufficient proximity to one another can be coupled to the same strut 113. In one non-limiting example, the drop-out sections 115' that are shown mounting the charging consoles 105A and 105B in FIG. 4 can be coupled to a single strut 113.

The disclosed ceiling-mounted EV charging system 100 is especially advantageous for electric vehicle fleet charging applications and multi-level parking lot applications, as the disclosed charging system 100 enables simplification and lowest-total-installed-cost in comparison to traditional ground-mounted EV charging systems and related electrical infrastructure. By using overhead cable tray systems and integrating the EV charging stations into a single system, fleet charging (for example, in parcel delivery operations) can be easily adapted to single-sided truck parking schemes, double-sided truck parking schemes, flexible spacing over package loading conveyors, and many other typical applications. In addition, by using open cable tray for electrical power feeder cable routing and support, the charging system 100 can be easily expanded to accommodate additional EV charging stations by adding additional cable runs between the building load center and the desired location(s) of the additional charging station(s).

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. An electric vehicle, EV, charging system comprising:
a number of cable trays comprising EV charger mounting,
a number of feeder cables electrically connected to a load center and supported by the number of cable trays, and
a number of EV charging stations connected to the number of power feeder line cables and mounted to the EV charger mounting, each EV charging station comprising:
a console,
an EV charging cable connected to the console; and
an EV charging handle electrically connected to the EV charging cable, the EV charging handle being structured to electrically connect to an electric vehicle,
wherein the number of cable trays are structured to be overhead-mounted to the ceiling of a building.

2. The EV charging system of claim 1,
wherein the number of cable trays includes a number of drop-out sections,
wherein at least one drop-out section comprises an allotment of the EV charger mounting,
wherein at least one EV charging station is coupled to the at least one drop-out section,
wherein the allotment of the EV charger mounting comprises a mounting plate coupled to the at least one drop-out section, and
wherein the console of the at least one EV charging station is mounted on the mounting plate.

3. The EV charging system of claim 2, further comprising:
a number of struts coupled to the at least one drop-out section; and
a number of suspension components coupled to each strut of the number of struts and structured to be coupled to a ceiling.

4. The EV charging system of claim 2, further comprising:
for each EV charging station, an associated cable weight-balancer, with each cable weight-balancer comprising a cable attachment support means, and
wherein each EV cable weight-balancer is configured to prevent the EV charging handle and the EV charging cable of its associated EV charging station from dropping onto a floor of the building.

5. The EV charging system of claim 4, further comprising:
a number of struts coupled to the at least one drop-out section; and
a number of suspension components coupled to each strut of the number of struts and structured to be coupled to a ceiling
wherein each cable weight-balancer is coupled to at least one strut of the number of struts.

6. The EV charging system of claim 2,
wherein the number of cable trays further includes a number of feeder routing trays,
wherein each feeder routing tray comprises a plurality of entry/exit points through which any given feeder cable can enter or exit the feeder routing tray,
wherein each drop-out section is associated with and coupled to one of the entry/exit points of one feeder routing tray,
wherein, for each drop-out section, the drop-out section receives whichever feeder cable of the number of feeder cables that exits the associated entry/exit point.

7. The EV charging system of claim 6,
wherein each of the feeder routing trays is structured such that, if a given entry/exit point is unconnected such that the given entry/exit point is not coupled to one of the drop-out sections, an additional drop-out section can be added to the EV charging system and coupled to whichever feeder routing tray has the unconnected entry/exit point.

8. The EV charging system of claim 1,
wherein the number of cable trays includes a number of drop-out sections,
wherein at least one drop-out section comprises an integrated mounting structure,
wherein at least one EV charging station is coupled to the at least one drop-out section,
wherein the console of the at least one EV charging station is mounted to the integrated mounting structure of the at least one drop-out section.

9. The EV charging system of claim 8, further comprising:
a number of struts coupled to the at least one drop-out section; and
a number of suspension components coupled to each strut of the number of struts and structured to be coupled to a ceiling.

10. The EV charging system of claim 8, further comprising:
for each EV charging station, an associated cable weight-balancer, with each cable weight-balancer comprising a cable attachment support means, and
wherein each EV cable weight-balancer is configured to prevent the EV charging handle and the EV charging cable of its associated EV charging station from dropping onto a floor of the building.

11. The EV charging system of claim 10, further comprising:
a number of struts coupled to the at least one drop-out section; and
a number of suspension components coupled to each strut of the number of struts and structured to be coupled to a ceiling
wherein each cable weight-balancer is coupled to at least one strut of the number of struts.

12. The EV charging system of claim 8,
wherein the number of cable trays further includes a number of feeder routing trays,
wherein each feeder routing tray comprises a plurality of entry/exit points through which any given feeder cable can enter or exit the feeder routing tray,
wherein each drop-out section is associated with and coupled to one of the entry/exit points of one feeder routing tray,
wherein, for each drop-out section, the drop-out section receives whichever feeder cable of the number of feeder cables that exits the associated entry/exit point.

13. The EV charging system of claim 12,
wherein each of the feeder routing trays is structured such that, if a given entry/exit point is unconnected such that the given entry/exit point is not coupled to one of the drop-out sections, an additional drop-out section can be added to the EV charging system and coupled to whichever feeder routing tray has the unconnected entry/exit point.

14. The EV charging system of claim 1,
wherein the number of cable trays are single-sided or multi-sided.

15. The EV charging system according to any of claims 3, 5, 9, or 11,
wherein the number of suspension components includes seismic bracing components.
